(19) Europäisches Patentamt
European Patent Office
Office européen des brevets

(11) **EP 4 618 291 A1**

(12) **EUROPEAN PATENT APPLICATION**
published in accordance with Art. 153(4) EPC

(43) Date of publication:
**17.09.2025 Bulletin 2025/38**

(21) Application number: 23923265.5

(22) Date of filing: **21.02.2023**

(51) International Patent Classification (IPC):
*H01M 50/44* (2021.01)   *H01M 50/40* (2021.01)

(52) Cooperative Patent Classification (CPC):
**H01M 10/05; H01M 50/40; H01M 50/403; H01M 50/409; H01M 50/44; H01M 50/449; Y02E 60/10**

(86) International application number:
**PCT/CN2023/077315**

(87) International publication number:
**WO 2024/174080 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
• XU, Ming
  Ningde, Fujian 352100 (CN)
• YANG, Jianrui
  Ningde, Fujian 352100 (CN)
• WEI, Manxiang
  Ningde, Fujian 352100 (CN)

(74) Representative: **Gong, Jinping**
**CocreateIP**
**Neumarkter Straße 21**
**81673 München (DE)**

(54) **SEPARATOR, PREPARATION METHOD THEREFOR, AND SECONDARY BATTERY AND ELECTRICAL APPARATUS RELATED THERETO**

(57)    The present application discloses a separator, a method for preparing the same, a secondary battery and an electrical device related thereto, wherein the separator comprises a porous substrate and a coating provided on at least one surface of the porous substrate, the coating comprises a fibrous material and at least a portion of the fibrous material is embedded in pores of the porous substrate, and a depth to which the fibrous material is embedded in the pores of the porous substrate along the direction of the thickness of the separator is denoted as $H_1$, and $H_1$ is greater than or equal to 0.02 $\mu$m.

**5**

**FIG. 1**

**Description**

## TECHNICAL FIELD

The present application relates to a separator, a method for preparing the same, related secondary battery and electrical device.

## BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, their reliability, especially thermal stability, has received more and more attention. However, the existing methods for improving the thermal stability of the secondary battery are often not conducive to balancing the energy density and service life of the secondary battery; furthermore, the continuous increase in temperature of the secondary battery is also prone to lead to an internal short circuit and induce thermal runaway of the secondary battery, or even lead to safety accidents such as fire and explosion of the secondary battery. The foregoing statements are intended only to provide background technical information relevant to the present application and do not necessarily constitute prior art.

## SUMMARY

The present application provides a separator, a method for preparing the same and a secondary battery and an electrical device related thereto, the separator being able to reduce the degree of thermal runaway of the secondary battery, or even prevent the occurrence of thermal runaway, effectively reducing the occurrence of safety accidents, such as fire, explosion, etc., of the secondary battery; and also enabling the secondary battery to have high energy density, high thermal stability, long cycle life, and good dynamic performance.

A first aspect of the present application provides a separator comprising a porous substrate and a coating provided on at least one surface of the porous substrate, wherein the coating comprises a fibrous material and at least a portion of the fibrous material is embedded in pores of the porous substrate, and the depth to which the fibrous material is embedded in the pores of the porous substrate along the direction of the thickness of the separator is denoted as $H_1$, and $H_1$ is greater than or equal to 0.02 $\mu$m.

By providing a coating comprising the fibrous material on the surface of the porous substrate of the separator, and making the depth to which the fibrous material is embedded in the pores of the porous substrate greater than or equal to 0.02 $\mu$m, it is possible to play a role in reducing the degree of thermal runaway of the secondary battery, or even preventing the occurrence of thermal runaway of the secondary battery, thereby effectively reducing the occurrence of fire, explosion and other safety accidents of the secondary battery. Furthermore, it is possible to make the secondary battery have a combination of high energy density, high thermal stability, long cycle life, and good dynamic performance.

In some embodiments of the present application, $H_1$ is 0.022 m-0.150 $\mu$m, optionally 0.025 m-0.100 $\mu$m, which is conducive to the molten porous substrate entering the coating along the fibrous material under the action of the capillary effect, so as to enable the separator to form an integrated film layer, reduce the probability of an internal short circuit of the positive electrode and the negative electrode directly contacting each other, and reduce the degree of thermal runaway of the secondary battery, or even prevent the thermal runaway of the secondary battery from occurring, thereby effectively reducing the occurrence of fire, explosion and other safety accidents of the secondary battery. In addition, it facilitates the secondary battery to have good cycle performance.

In some embodiments of the present application, the porous substrate has a thickness denoted as $H_2$ in $\mu$m, and $H_1/H_2$ is greater than or equal to 0.003; optionally, $H_1/H_2$ is 0.004-0.025, and even more optionally, $H_1/H_2$ is 0.0045-0.020. By adjusting the $H_1/H_2$ in the above range, it is favorable for the molten porous substrate to enter into the coating along the fibrous material under the action of capillary effect, so that the separator forms an integrated film layer, reduces the probability of an internal short circuit occurring in the direct contact between the positive electrode and the negative electrode, and reduces the degree of thermal runaway of the secondary battery, or even prevents thermal runaway from occurring in the secondary battery, so as to effectively reduce the occurrence of fire, explosion, and other safety accidents of the secondary battery; in addition, it is also favorable for the separator to have high porosity and high ionic conductivity, so as to make the secondary battery have both a long cycle life and good dynamic performance.

In some embodiments of the present application, the porous substrate has a thickness denoted as $H_2$, and $H_2$ is less than or equal to 12 $\mu$m, optionally 3 $\mu$m-10 $\mu$m.

In some embodiments of the present application, the fibrous material has an average length denoted as L in nm, and $0.03 \leq 1000H_1/L \leq 0.5$, optionally, $0.05 \leq 1000H_1/L \leq 0.35$. By adjusting $1000H_1/L$ within the above range, the probability of an internal short circuit occurring in direct contact between the positive electrode and the negative electrode can be reduced, and the degree of thermal runaway of the secondary battery can be reduced, and even the thermal runaway of the secondary battery can be prevented, thereby effectively reducing fire, explosion and other safety accidents of the secondary battery. In addition, it is also favorable for the separator to have high porosity and high ionic conductivity, which in turn enables the secondary battery to have long cycle life and good dynamic performance at the same time.

In some embodiments of the present application, the porous substrate has an average pore diameter denoted as V in nm, and the fibrous material has an average diameter denoted as D in nm, where $0.6 \leq V/D \leq 2.1$; optionally, $0.7 \leq V/D \leq 1.8$, and more optionally, $0.8 \leq V/D \leq 1.6$. By adjusting the V/D to be within the above ranges, it is possible to reduce the probability of an internal short circuit occurring in direct contact between the positive electrode and the negative electrode, reduce the degree of thermal runaway of the secondary battery, or even prevent thermal runaway from occurring in the secondary battery, thereby effectively reducing safety accidents such as fire and explosion of the secondary battery; on the other hand, it is also possible to avoid excessively sacrificing the porosity of the porous substrate and make the separator have high porosity and high ionic conductivity, which in turn enables the secondary battery to have long cycle life and good dynamic performance at the same time.

In some embodiments of the present application, the porous substrate has an average pore size denoted as V in nm, where $20 \text{ nm} \leq V \leq 40 \text{ nm}$, and optionally, $25 \text{ nm} \leq V \leq 37 \text{ nm}$.

In some embodiments of the present application, the porous substrate has an average pore diameter denoted as V in nm, the porous substrate has a melting point denoted as $T_m$ in °C, the fibrous material has an average diameter denoted as D in nm, and the fibrous material has an average length denoted as L in nm, where $0.03 \leq L/(D \times T_m) \leq 0.14$; optionally, $0.04 \leq L/(D \times T_m) \leq 0.12$; more optionally, $0.05 \leq L/(D \times T_m) \leq 0.10$. By adjusting $L/(D \times T_m)$ within the above range, it is favorable for the molten porous substrate to enter into the coating along the fibrous material under the action of the capillary effect, so as to enable the separator to form an integrated film layer, to reduce the probability of the positive electrode and the negative electrode directly contacting to occur an internal short circuit, to reduce the degree of thermal runaway of the secondary battery, and even to prevent the thermal runaway of the secondary battery, thereby effectively reducing safety accidents such as fire and explosion of the secondary battery.

In some embodiment of the present application, the porous substrate has a melting point denoted as $T_m$, and $T_m \geq 120°C$, optionally, $120°C \leq T_m \leq 180°C$.

In some embodiments of the present application, the fibrous material has an average diameter denoted as D, D being greater than or equal to 15 nm, and optionally 20 nm-35 nm. When the average diameter of the fibrous material is within the above range, it can reduce the probability of an internal short circuit occurring in direct contact between the positive electrode and the negative electrode, reduce the degree of thermal runaway of the secondary battery, or even prevent the thermal runaway of the secondary battery, and thereby effectively reduce safety accidents such as fire and explosion of the secondary battery. In addition, it can further enhance the ionic conductivity and voltage breakdown resistance of the separator and at the same time contributes to the formation of an integrated effect by lapping the fibrous material with the filler, etc., thereby further improving the heat resistance of the separator.

In some embodiments of the present application, the fibrous material has an average length denoted as L, L being 100 nm-600 nm, optionally 200 nm-500 nm. When the average length of the fibrous material is within the above range, the heat resistance and ionic conductivity of the separator can be further improved.

In some embodiments of the present application, the fibrous material has an aspect ratio denoted as L/D, L/D being 3-40, optionally 6-30. When the aspect ratio of the fibrous material is within the above range, the ionic conductivity of the separator as well as the infiltration and retention characteristics of the separator to an electrolytic solution can be further enhanced.

In some embodiments of the present application, the fibrous material may have a shape including one or more of bar, tubular, rod and fibrous shape.

In some embodiments of the present application, the fibrous material comprises at least one of an organic material or an inorganic material.

In some embodiments of the present application, the organic material comprises at least one of nanocellulose, polytetrafluoroethylene nanofibers, or polyamide nanofibers, optionally, the nanocellulose comprises at least one of cellulose nanofibers, cellulose nanowhiskers, or bacterial nanocellulose.

In some embodiments of the present application, the inorganic material comprises at least one of halloysite nanotubes, nanorodular alumina, nanorodular boehmite, nanorodular silicon oxide or glass fibers.

In some embodiments of the present application, the fibrous material comprises nanocellulose and the nanocellulose comprises at least of unmodified nanocellulose and modified nanocellulose.

In some embodiments of the present application, the modified nanocellulose comprises a modifying group, and the modifying group comprises at least one of an amino group, a carboxylic acid group, an aldehyde group, a sulfonic acid group, a boric acid group, or a phosphoric acid group, and optionally comprises at least of a sulfonic acid group, a boric acid group, or a phosphoric acid group. When the nanocellulose has the above-mentioned specific modifying groups, the modifying groups can effectively improve the heat resistance of the separator and improve the thermal safety performance of the secondary battery; it can also improve the bond strength between the coating and the porous substrate; and it is also conducive to the formation of an integrated effect of the nanocellulose lapping with the filler.

In some embodiments of the present application, the modified nanocellulose comprises a hydroxyl group and a modifying group, and a molar ratio of the modifying group to the hydroxyl group is from 1:4 to 4:1, optionally from 2:3 to 7:3. When the molar ratio of the modifying group to the hydroxyl group is in the appropriate ranges, the heat resistance and ionic conductivity of the separator as well as the infiltration and retention characteristics of the separator to an electrolytic solution may be further improved, and the thermal stability, cycle performance and dynamic performance of the secondary battery may be enhanced.

In some embodiments of the present application, the fibrous material comprises a sulfonic acid group and the content of sulfur element in the fibrous material is $\geq 0.1$ wt%, optionally 0.2 wt% to 0.5 wt%, based on the total weight of the fibrous material.

In some embodiments of the present application, the coating comprises a three-dimensional skeletal structure and a filler, the three-dimensional skeletal structure comprising the fibrous material, and at least a portion of the filler being filled in the three-dimensional skeletal structure.

In some embodiments of the present application, the filler comprises at least one of primary particles or secondary particles. The filler with of secondary particle morphology can better overlap with the three-dimensional skeleton structure to form an integrated effect, thereby enabling the coating to have a more stable spatial network structure, which can further improve the heat resistance of the separator. The filler with primary particle morphology is conducive to reducing the moisture content of the coating and improving the ionic conductivity of the coating, thereby helping to improve the cycle performance of the secondary battery.

In some embodiments of the present application, the fibrous material has an average length denoted as L in nm, and the filler has a volume-distributed particle size Dv50 denoted as A in nm, and $L \geq (A \times \sqrt{2})/8$ . By adjusting $L \geq (A \times \sqrt{2})/8$ , it is conducive to the formation of an integrated effect of the lapping of the fibrous material and the filler, which is thereby able to further enhance the heat resistance and the ionic conductivity of the separator as well as the infiltration and retention properties of the separator to an electrolytic solution, and enhance the thermal stability, cycle performance and dynamic performance of the secondary battery.

In some embodiments of the present application, the filler has a volume-distributed particle size Dv50 denoted as A, and 80 nm $\leq$ A $\leq$ 220 nm, optionally 100 nm $\leq$ A $\leq$ 200 nm.

In some embodiments of the present application, the content of the three-dimensional skeletal structure is from 5 wt% to 40 wt%, optionally from 10 wt% to 25 wt%, based on the total weight of the coating.

In some embodiments of the present application, the content of the filler is greater than 60 wt%, optionally from 70 wt% to 88 wt%, based on the total weight of the coating.

When the content of the three-dimensional skeleton structure is within the above range, it can enable the coating slurry to have a suitable viscosity, which is more favorable for coating; in addition, it is also favorable for the three-dimensional skeleton structure to lap with the filler to form an integrated effect, whereby the coating can be made to have a more stable spatial network structure, and thus the heat resistance and ionic conductivity of the separator, as well as the infiltration and retention characteristics of the separator to an electrolytic solution, and the voltage breakdown resistance of the separator can be further improved.

In some embodiments of the present application, the coating further comprises a non-granular binder. Optionally, the non-granular binder comprises an aqueous solution-type binder. Optionally, the non-granular binder in the coating is present in an amount of $\leq 2$ wt%, based on the total weight of the coating.

In any embodiment of the present application, the coating has a thickness of $\leq 2$ $\mu$m, optionally from 0.5 $\mu$m to 1.5 $\mu$m, thereby contributing to the energy density of the secondary battery.

In some embodiments of the present application, the separator further comprises an adhesive layer, the adhesive layer is disposed on at least part of surface of the coating, and the adhesive layer comprises a granular binder. Optionally, the granular binder comprises one or more of a homopolymer or copolymer of acrylate monomer, a homopolymer or copolymer of acrylic monomer, a homopolymer or copolymer of fluorine-containing olefin monomer. The adhesive layer can not only prevent the coating from peeling off and improve the safety performance of the secondary battery, but also improve the interface between the separator and the electrode and improve the cycle performance of the secondary battery.

In some embodiments of the present application, the separator has a longitudinal thermal shrinkage rate at 150°C for 1 h of $\leq$4%, optionally from 0.5% to 3%.

In some embodiments of the present application, the separator has a lateral thermal shrinkage rate at 150°C for 1 h of $\leq$4%, optionally from 0.5% to 3%.

In some embodiments of the present application, the separator has a longitudinal tensile strength of $\geq$ 2200 kg/cm$^2$, optionally from 2500 kg/m$^2$ to 4500 kg/m$^2$.

In some embodiments of the present application, the separator has a lateral tensile strength of $\geq$ 2200 kg/m$^2$, optionally from 2500 kg/m$^2$ to 4500 kg/m$^2$.

In some embodiments of the present application, the separator has a wetting length of ≥ 35 mm, optionally from 40 mm to 80 mm.

In some embodiments of the present application, the separator has a wetting speed of ≥ 4 mm/s, optionally from 4.5 mm/s to 10 mm/s.

In some embodiments of the present application, the separator has an air permeability of ≤ 300 s/100 mL, optionally from 100 s/100 mL to 270 s/100 mL.

A second aspect of the present application provides a method for preparing the separator according to the first aspect of the present application, comprising the following steps: providing a porous substrate; mixing fibrous material and optionally a filler in a predetermined proportion in a solvent to formulate a coating slurry; applying the coating slurry on at least one surface of the porous substrate, and drying to obtain a separator, wherein the separator comprises a porous substrate and a coating provided on at least one surface of the porous substrate, wherein the coating comprises a fibrous material and at least a portion of the fibrous material is embedded in pores of the porous substrate, and the depth to which the fibrous material is embedded in the pores of the porous substrate along the direction of the thickness of the separator is denoted as $H_1$, and $H_1$ is greater than or equal to 0.02 $\mu$m.

In some embodiments of the present application, the coating slurry has a dispersing line speed of 8m/s-22m/s, optionally 12m/s-18m/s.

In some embodiments of the present application, the coating slurry has a coating speed of 30m/min-140m/min, optionally 90m/min-130m/min.

In some embodiments of the present application, the coating slurry has a drying temperature of 50°C-80°C, optionally 55°C-70°C.

In some embodiments of the present application, the coating slurry has a total drying time of 3s-11s, optionally 5s-10s.

In some embodiments of the present application, the drying is carried out in a multi-stage oven, optionally the number of the oven stages is 3-6.

In some embodiments of the present application, the drying is carried out in a multi-stage oven, the temperature of the first stage of the oven being greater than 50°C, optionally greater than or equal to 55°C.

In some embodiment of the present application, the drying is carried out in a multi-stage oven, and the drying time in the first stage of the oven is less than 4s, optionally less than or equal to 3.5s.

A third aspect of the present application provides a secondary battery, comprising the separator of the first aspect of the present application or the separator prepared by the method of the second aspect of the present application.

A fourth aspect of the present application provides an electrical device, comprising the secondary battery according to the third aspect of the present application.

The separator of the present application is capable of reducing the degree of thermal runaway of the secondary battery, or even preventing the occurrence of thermal runaway, effectively reducing the occurrence of fire, explosion and other safety accidents of the secondary battery, and also enabling the secondary battery to have high energy density, high thermal stability, long cycle life, and a good dynamic performance, and the p electrical device of the present application comprises the secondary battery provided in the present application, and thus has at least the same advantages as said secondary battery.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Casing; 52. Electrode assembly; 53. Cover plate.

## DETAILED DESCRIPTION

Hereinafter, embodiments of the separator of the present application, the method for preparing the same, and the related secondary battery and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, unless otherwise stated, the terms "first", "second", etc. are used only for descriptive purposes and are not to be understood as indicating or implying relative importance or implicitly specifying the number of technical features indicated.

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application. Unless stated otherwise, the testing temperature of each parameter is 25°C.

Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through to form a circuit.

At present, the separator used in commercial secondary batteries is usually a polyolefin porous film, which has poor heat resistance, and when heated, a significant thermal contraction effect occurs, resulting in direct contact between the positive electrode and the negative electrode inside the battery, leading to an internal short circuit, which is easy to induce thermal runaway, and in severe cases, the secondary battery will also be on fire, explosion and other safety accidents.

In order to solve the above problems, the current measures are mainly used in the polyolefin porous film coated with a layer of heat-resistant inorganic ceramic layer, which can increase the mechanical strength of the separator, reduce the degree of shrinkage of the separator when heated, and reduce the risk of internal short circuits between the positive and negative electrodes. However, the particle size of the commercially available inorganic ceramic particles is relatively large, which increases the overall thickness of the separator, resulting in an inability to balance the energy density of the secondary battery, especially in the field of power batteries, which is not conducive to the enhancement of mileage; in addition, the commercially available inorganic ceramic particles have a limited effect on the improvement of the separator's heat resistance, and at the same time cannot play a role in preventing thermal runaway from occurring in the secondary battery.

Therefore, the separator of the prior art cannot play a role in preventing thermal runaway of the secondary battery, and in addition, it is often difficult to make the secondary battery have high energy density, high thermal stability, long cycle life, and good dynamic performance at the same time.

The inventors were surprised to find that by setting a coating containing a fibrous material on the surface of the porous substrate of the separator, and making the depth to which the fibrous material is embedded in the pores of the porous substrate greater than or equal to 0.02 $\mu$m, the separator can play a role in decreasing the degree of thermal runaway of the secondary battery, or even preventing the thermal runaway of the secondary battery from occurring, which effectively reduces safety accidents such as fire and explosion of the secondary battery. In addition, it can make the secondary battery have high energy density, high thermal stability, long cycle life and good dynamic performance at the same time.

## **Separator**

A first aspect of the present application provides a separator comprising a porous substrate and a coating provided on at least one surface of the porous substrate, wherein the coating comprises a fibrous material and at least a portion of the fibrous material is embedded in pores of the porous substrate, and the depth to which the fibrous material is embedded in the pores of the porous substrate along the direction of the thickness of the separator is denoted as $H_1$, and $H_1$ is greater than or equal to 0.02 $\mu$m.

In the separator provided by the embodiments of the present application, the depth to which the fibrous material in the coating is embedded into the pores of the porous substrate is greater than or equal to 0.02$\mu$m. When the internal temperature of the secondary battery reaches the melting point of the porous substrate, the molten porous substrate can enter the coating along the fibrous materials under the action of capillary forces, ultimately forming an integrated film layer of the separator. This film layer can reduce the probability of direct contact between the positive and negative electrodes leading to internal short circuits, reduce the degree of thermal runaway in secondary batteries, or even prevent thermal runaway from occurring, thereby effectively reducing the risk of safety incidents such as fires and explosions in secondary batteries.

The coating comprises fibrous materials. Compared to inorganic ceramic particles, fibrous materials have the advantage of a larger specific surface area, which allows the coating to have high porosity and high ionic conductivity, and also enables the coating to maintain high heat resistance even when it is thin, thereby allowing secondary batteries to balance high energy density, high thermal stability, long cycle life, and good dynamic performance.

The term "fibrous material" refers to materials with an aspect ratio of 5 or more. In some embodiments, the morphology of the fibrous materials may include at least one of bar, tubular (e.g., hollow tubular), rod, or fibrous (e.g., fiber) shape.

In some embodiments, $H_1$ may be in the range of 0.020m-0.200$\mu$m, 0.021m-0.180$\mu$m, 0.022m-0.150$\mu$m, 0.024m-0.120$\mu$m, 0.025m-0.100$\mu$m, 0.028m-0.090$\mu$m, or 0.035m-0.085$\mu$m. This is conducive to the molten porous substrate entering the coating along the fibrous materials under the action of capillary forces, forming an integrated film layer of the separator, reducing the probability of direct contact between the positive and negative electrodes leading to internal short circuits, reducing the degree of thermal runaway in secondary batteries, or even preventing thermal runaway, thus effectively reducing the risk of safety incidents such as fires and explosions in secondary batteries; it also benefits the secondary battery in having good cycle performance.

In some embodiments, the porous substrate has a thickness denoted as $H_2$ in $\mu$m, and $H_1/H_2$ is greater than or equal to 0.003. Optionally, $H_1/H_2$ may be in the range of 0.003-0.035, 0.0035-0.032, 0.004-0.025, 0.0045-0.020, 0.0048-0.018, 0.005-0.016, or 0.0055-0.014.

By adjusting $H_1/H_2$ within these ranges, it is favorable for the molten porous substrate to enter the coating along the fibrous materials under the action of capillary forces, forming an integrated film layer of the separator, reducing the probability of direct contact between the positive and negative electrodes leading to internal short circuits, reducing the degree of thermal runaway in secondary batteries, or even preventing thermal runaway, thus effectively reducing the risk of safety incidents such as fires and explosions in secondary batteries; moreover, it is beneficial for the separator to have high porosity and high ionic conductivity, thereby enabling the secondary battery to balance long cycle life and good dynamic performance.

In some embodiments, the fibrous materials has an average length denoted as L in nm, and $0.03 \leq 1000H_1/L \leq 0.5$. Optionally, $0.05 \leq 1000H_1/L \leq 0.35$, $0.06 \leq 1000H_1/L \leq 0.34$, $0.08 \leq 1000H_1/L \leq 0.35$, $0.09 \leq 1000H_1/L \leq 0.30$, or $0.10 \leq 1000H_1/L \leq 0.25$.

By adjusting $1000H_1/L$ within these ranges, a portion of the fibrous materials is embedded in the pores of the porous substrate, while another portion is located in the coating. This facilitates the molten porous substrate entering the coating along the fibrous materials under the action of capillary forces, resulting in the formation of an integrated film layer of the separator. This reduces the probability of direct contact between the positive and negative electrodes leading to internal short circuits, decreases the degree of thermal runaway in secondary batteries, and can even prevent thermal runaway from occurring, thereby effectively reducing the risk of safety incidents such as fires and explosions in secondary batteries. Additionally, it is beneficial for the separator to have high porosity and high ionic conductivity, thus enabling the secondary battery to balance long cycle life and good dynamic performance.

The depth $H_1$ at which the fibrous materials are embedded in the pores of the porous substrate can be measured using ion polishing cross-sectional element analysis. The testing procedure can be carried out as follows: obtaining the porous substrate from the separator and cutting a sample of the porous substrate (e.g., with an area of $6cm \times 6cm$); stacking the sample with a copper sheet, rolling it 4-5 times, and then using liquid nitrogen cryo-ion polishing; spraying gold on the polished sample surface and placing it on a scanning electron microscope (SEM) dedicated fixture; selecting the EDS Mapping mode, setting the output result to "line scan" mode, and scanning with a voltage of 5-10KV. The depth of the characteristic elements of the fibrous materials (e.g., S, P, B, etc.) in the thickness direction of the porous substrate CP is marked as the depth $H_1$ at which the fibrous materials are embedded in the pores of the porous substrate. For accuracy, the average of the test results from multiple samples (e.g., 5-10) can be taken.

In some embodiments, the porous substrate has an average pore diameter denoted as V in nm, and the fibrous materials has an average diameter denoted as D in nm, where $0.6 \leq V/D \leq 2.1$; optionally, $0.7 \leq V/D \leq 1.8$, $0.8 \leq V/D \leq 1.6$, $0.9 \leq V/D \leq 1.5$, or $1.0 \leq V/D \leq 1.4$.

By adjusting the V/D ratio within these ranges, on one hand, it is advantageous for the fibrous materials to be embedded in the pores of the porous substrate. When the porous substrate is heated and molten, it allows the molten porous substrate to enter the coating along the fibrous materials under the action of capillary forces, forming an integrated film layer of the separator, and reducing the probability of internal short circuits. On the other hand, it can avoid overly sacrificing the porosity of the porous substrate, maintain high porosity and high ionic conductivity in the separator, thereby enabling the secondary battery to balance long cycle life and good dynamic performance.

In some embodiments, the porous substrate has a melting point denoted as $T_m$ in °C, the fibrous materials has an average diameter denoted as D in nm, and the fibrous materials has an average length denoted as L in nm, where $0.03 \leq L/(D \times T_m) \leq 0.14$; optionally, $0.04 \leq L/(D \times T_m) \leq 0.12$, $0.05 \leq L/(D \times T_m) \leq 0.10$.

By adjusting the $L/(D \times T_m)$ ratio within these ranges, it is favorable for the molten porous substrate to enter the coating along the fibrous materials under the action of capillary forces, forming an integrated film layer of the separator, and reducing the risk of safety incidents such as fires and explosions in secondary batteries.

In some embodiments, the porous substrate has a thickness denoted as $H_2$, and $H_2$ can be less than or equal to $12\mu m$, optionally ranging from $3\mu m$ to $10\mu m$.

In some embodiments, the porous substrate has a melting point denoted as $T_m$, and $T_m \geq 120°C$; optionally, $120°C \leq T_m \leq 180°C$, $132°C \leq T_m \leq 175°C$.

The melting point of the porous substrate has a well-known meaning in the art and can be measured using known methods. For example, differential scanning calorimetry can be used to test according to GB/T 28724-2012.

In some embodiments, the porous substrate has an average pore diameter denoted as V, and $18mn \leq V \leq 45mn$, optionally, $20nm \leq V \leq 40nm$, $25nm \leq V \leq 37nm$. This, on one hand, facilitates the embedding of the fibrous materials into the pores of the porous substrate, and on the other hand, avoids the pores of the porous substrate from being completely blocked by the fibrous materials, thereby enabling the secondary battery to balance long cycle life and good dynamic performance.

The average pore diameter of the porous substrate can be tested by using a mercury porosimeter, referring to GB/T 21650.1-2008.

The material of the porous substrate is not specially limited in the present application, and the porous substrate may be any known substrate with good chemical and mechanical stability; for example, the porous substrate may comprise one or more of a porous polyolefin-based resin film (e.g. one or more of polyethylene, polypropylene, and polyvinylidene fluoride), a porous glass fiber, and a porous non-woven fabric. The porous substrate may be a single-layer film or a multilayer film. When the porous substrate is a multilayer composite film, the materials of individual layers may be the same or different.

In some embodiments, the coating may comprise a three-dimensional skeleton structure and fillers, the three-dimensional skeleton structure may comprise the fibrous materials, and at least a portion of the filler is filled in the three-dimensional skeleton structure. The term "three-dimensional skeleton structure" typically refers to a structure with a three-dimensional spatial shape and certain porosity, which can be formed by the interlocking of fibrous materials.

At least a portion of the filler is filled in the three-dimensional skeleton structure, which helps to achieve a nesting effect between the fillers and the three-dimensional skeleton structure. This not only increases the heat resistance of the separator, reduces its shrinkage when heated, and lowers the risk of short circuits between the positive and negative electrodes, thus providing the secondary battery with high thermal stability. It also maintains high bonding strength between the coating and the porous substrate, reducing the probability of filler shedding during the long-term charging and discharging process of the secondary battery. Moreover, by having at least a portion of the filler filled in the three-dimensional skeleton structure, there are more contact points between the fillers and the three-dimensional skeleton structure, which can reduce the amount of binder used in the coating. This, in turn, effectively reduces the risk of the binder blocking pores and further improves the cycle performance and dynamic performance of the secondary battery.

In some embodiments, at least a portion of the filler may be filled in the three-dimensional skeleton structure, while the other part of the fillers may be located on the surface of the three-dimensional skeleton structure and/or at the interface between the three-dimensional skeleton structure and the porous substrate. At the interface position between the three-dimensional skeleton structure and the porous substrate, there may also be a small amount of fillers embedded in the porous substrate, for example, during the winding process of the electrode assembly, due to external pressure, a small amount of fillers at the interface position may be embedded in the porous substrate's matrix and/or pores.

In some embodiments, the fibrous material has an average diameter denoted as D, and D can be greater than or equal to 15nm, optionally ranging from 15nm to 42nm, 15nm to 40nm, 15nm to 38nm, 15nm to 35nm, 18nm to 40nm, 18nm to 38nm, 18nm to 35nm, 20nm to 40nm, 20nm to 38nm, or 20nm to 35nm. When the average diameter of the fibrous materials is within the above range, it allows the fibrous materials to be embedded in the pores of the porous substrate. When the porous substrate is heated and molten, the molten porous substrate can enter the coating along the fibrous materials under the action of capillary forces, forming an integrated film layer of the separator. This reduces the probability of direct contact between the positive and negative electrodes leading to internal short circuits, decreases the degree of thermal runaway in secondary batteries, and can even prevent thermal runaway from occurring, thereby effectively reducing the risk of safety incidents such as fires and explosions in secondary batteries. Additionally, when the average diameter of the fibrous materials is within the above range, it can further enhance the ionic conductivity and voltage withstand characteristics of the separator. It further helps the fibrous materials to interlock with the fillers and other materials to form an integrated effect, thus further enhancing the heat resistance of the separator.

In some embodiments, the fibrous material has an average length denoted as L, and L can be 100nm to 600nm, optionally ranging from 200nm to 500nm. When the average length of the fibrous materials is within the above range, it can further enhance the heat resistance and ionic conductivity of the separator. It also effectively avoids the following situations: when the average length of the fibrous materials is too short, the interlocking effect with the fillers and other materials is poor, resulting in a decrease in the heat resistance of the coating, and during the drying process of the coating, the three-dimensional skeleton structure is prone to collapse due to the lack of support from the fillers, which may easily lead to clogging of pores, hindering ion transport and moisture discharge, and thus potentially affecting the thermal stability, cycle performance, and dynamic performance of the secondary battery; when the average length of the fibrous materials is too long, the viscosity of the coating slurry is high, and the flow is poor, which may affect the coating process and quality, such as potentially affecting the heat resistance and ionic conductivity of the separator.

In some embodiments, the fibrous material has an aspect ratio denoted as L/D, and L/D can be 3 to 40, optionally ranging from 4 to 38, 5 to 35, 5 to 32, or 6 to 30. When the aspect ratio of the fibrous materials is within the above range, it can further enhance the ionic conductivity of the separator and the infiltration and retention characteristics of the separator to an electrolytic solution. It also effectively avoids the following situations: when the aspect ratio of the fibrous materials is too small, the interlocking effect with the fillers is poor, resulting in a decrease in the heat resistance of the coating, and during the drying process of the coating, the three-dimensional skeleton structure is prone to collapse due to the lack of support from the fillers, which may easily lead to clogging of pores, hindering ion transport and moisture discharge, and thus potentially affecting the thermal stability, cycle performance, and dynamic performance of the secondary battery; when the aspect ratio of the fibrous materials is too large, the pores of the three-dimensional skeleton structure formed may be smaller, which may result in a decrease in the ionic conductivity of the separator.

By adjusting the average diameter and/or average length of the nanocellulose fibers, the depth at which the fibrous materials are embedded in the pores of the porous substrate can be regulated. Additionally, the angle between the fibrous materials and the thickness direction of the porous substrate can be adjusted within a suitable range, for example, the angle can be greater than or equal to 0° and less than 90°, optionally ranging from 30° to 80°.

The average length and average diameter of the fibrous material can be determined using the following method: a sample with a size of 3.6 mm $\times$ 3.6 mm is cut from a region randomly selected on the separator, measuring the micro-morphology and structure of the coating in the sample using a scanning electron microscope (for example, ZEISS Sigma 300) to obtain an SEM image, where high vacuum mode is selected, working voltage is 3 kV, and magnification is 30000X; based on the obtained SEM image, selecting multiple (for example, more than 5) test regions for length statistics, where the size of each test region is 0.5 $\mu$m $\times$ 0.5 $\mu$m, and then taking the average value of the lengths obtained from the test regions as the average length of the fibrous material; and based on the obtained SEM image, selecting multiple (for example, more than 5) test regions for diameter statistics through Nano Measurer particle size distribution statistical software, where the size of each test region is 0.5 μm × 0.5 μm, and then taking the average value of the diameters obtained from the test regions as the average diameter of the fibrous material.

In some embodiments, the fibrous material comprises at least one of an organic material or an inorganic material.

Optionally, the organic material comprises at least one of nanocellulose, polytetrafluoroethylene nanofiber, or polyamide nanofiber.

Optionally, the inorganic material comprises at least one of halloysite nanotubes, nano-rod-shaped aluminum oxide, nano-rod-shaped boehmite, nano-rod-shaped silicon oxide, or glass fibers.

In some embodiments, the fibrous material comprises nanocellulose. Optionally, the nanocellulose comprises at least one of cellulose nanofibrils (Cellulose nanofibrils, CNF, also known as nanofibrillated cellulose or microfibrillated cellulose), cellulose nanocrystals (Cellulose nanocrystals, CNC, also known as cellulose nanocrystallines or nanocrystalline cellulose), or bacterial nanocellulose (Bacterial nanocellulose, BNC, also known as bacterial cellulose or microbial cellulose).

Nanocellulose is a general term for cellulose with a size in nanoscale (for example, within 100 nm) in any dimension, which has both the characteristics of cellulose and the characteristics of nanoparticles. Nanocellulose may be a macromolecular nanomaterial extracted from natural sources such as wood and cotton through one or more methods such as chemical, physical, or biological methods, has advantages such as wide availability, low costs, biodegradability, high modulus, and high specific surface area, and therefore is an excellent substitute for traditional petrochemical resources, effectively alleviating problems such as environmental pollution and shortage in petrochemical resources. Nanocellulose also has good high-temperature resistance and small volume change when heated, thereby enhancing the heat resistance of the separator. In addition, compared with conventional inorganic ceramic particles, nanocellulose has a lower density, thereby reducing the weight of the secondary battery and increasing the gravimetric energy density of the secondary battery. In addition, the three-dimensional skeleton structure formed by nanocellulose may also have tiny nanopores, preventing current leakage, thereby allowing the separator to achieve balance between good electrolytic solution infiltration and retention and good voltage breakdown resistance.

In some embodiments, the nanocellulose may comprise unmodified nanocellulose (also known as hydroxy nanocellulose) and modified nanocellulose, optionally modified nanocellulose.

The modified nanocellulose refers to nanocellulose that simultaneously comprises a hydroxyl group and a modifying groups. In some embodiments, the modified nanocellulose comprises a modifying group, and the modifying groups may comprise at least one of an amino group, a carboxylic acid group, an aldehyde group, a sulfonic acid group, a boric acid group, or a phosphoric acid group, and optionally at least of a sulfonic acid group, a boric acid group, or a phosphoric acid group.

When the nanocellulose having the above specific modifying group can effectively enhance the heat resistance of the separator and improve the thermal stability of the secondary battery; and can also enhance the adhesion strength between the coating and the porous substrate. The nanocellulose having the above specific modifying group can also help the formation of an integrated effect of the nanocellulose lapping with the filler. This allows for a more stable spatial network structure of the coating, thereby improving the infiltration and retention of the separator to an electrolytic solution and enhancing the ionic conductivity and voltage breakdown resistance of the separator. In addition, the presence of the modifying group can also reduce the proportion of the hydroxyl group, which can ensure appropriate viscosity of the coating slurry to facilitate applying, and can also improve the production efficiency of the separator and the uniformity of the coating.

In some embodiments, a molar ratio of the modifying group to the hydroxyl group may be from 1:4 to 4:1, optionally from 2:3 to 7:3. The molar ratio of the modifying group to the hydroxyl group falling within the appropriate range can further enhance the heat resistance and ionic conductivity of the separator, the infiltration and retention of the separator to an electrolytic solution, and as well the thermal stability, the cycle performance, and dynamic performance of the secondary battery. In addition, the following situations can be effectively avoided: when the molar ratio of the modifying group to the hydroxyl group is too small, further improvement effect of the modifying group on the heat resistance and ionic conductivity of the separator may be not significant; when the molar ratio of the modifying group to the hydroxyl group is too large, the infiltration and retention of the separator to an electrolytic solution may be deteriorated, which may in turn affect the cycle performance and/or dynamic performance of the secondary battery; and the heat resistance of the separator may also be decreased, which may in turn further affect the improvement effect on the thermal stability of the secondary battery.

The types of modifying group in nanocellulose may be determined by infrared spectroscopy. For example, the infrared spectrum may be used for test a material by determine the characteristic peaks contained in the material, thus determining the types of modifying group. Specifically, instruments and methods known in the field, for example an infrared spectrometer (such as IS10 Fourier transform infrared spectrometers of Nicolet Company in the United States), may be used for performing an analysis of infrared spectrum of a material according to GB/T 6040-2019 General Rules for Infrared Analysis.

In some embodiments, the fibrous material comprises a sulfonic acid group, and based on a total weight of the fibrous material, a percentage of element sulfur in the fibrous material is greater than or equal to 0.1 wt%, optionally from 0.2 wt% to 0.5 wt%.

The percentage of element sulfur in the fibrous material can be obtained using the following method: after drying the fibrous material, grinding it in a mortar (for example, an agate mortar) for 30 min, and then performing test using an X-ray diffractometer (for example, Miniflex600-C) to obtain the percentage of element sulfur. During test, a Cu target material and Ni filter can be used, with a tube pressure of 40 KV, a tube current of 15 mA, and a continuous scanning range of 5°-80°.

In some embodiments, the fibrous material has an average length denoted as L in nm, and the filler has a volume-distributed particle size Dv50 denoted as A in nm, and $L \geq (A \times \sqrt{2})/8$.

By adjusting $L \geq (A \times \sqrt{2})/8$, it is conducive to the formation of an integrated effect of the lapping of the fibrous material and the filler, which is thereby able to further enhance the heat resistance, the ionic conductivity and the infiltration and retention properties of the separator to an electrolytic solution, and thus enhance the thermal stability, cycle performance and dynamic performance of the secondary battery.

In some embodiments, the filler has a volume-distributed particle size Dv50 denoted as A, and 70 nm $\leq$ A $\leq$ 220 nm, optionally 80 nm $\leq$ A $\leq$ 220 nm, 100 nm $\leq$ A $\leq$ 200 nm.

The volume-distributed particle size Dv50 of the filler has well-known meaning in the art, and may be measured with known instruments and methods in the art. For example, it can be readily measured according to GB/T 19077-2016 using a laser particle size analyzer (for example, Master Size 3000).

In some embodiments, the filler comprises at least one of primary particles or secondary particles. Optionally, the filler comprises secondary particles or the combination of primary particles and secondary particles. The filler with secondary particle morphology can better overlap with the three-dimensional skeleton structure to form an integrated effect, thereby enabling the coating to have a more stable spatial network structure, which can further improve the heat resistance of the separator. The filler with primary particle morphology is conducive to reducing the moisture content of the coating and improving the ionic conductivity of the coating, thereby helping to improve the cycle performance of the secondary battery.

In some embodiments, the filler comprises the combination of primary particles and secondary particles, and based on a total weight of the filler, a percentage of the filler with primary particle morphology is less than a percentage of the filler with secondary particle morphology.

In some embodiments, the filler comprises the combination of primary particles and secondary particles, and based on the total weight of the filler, the percentage of the filler with primary particle morphology is less than or equal to 30 wt%.

In some embodiments, the filler comprises at least one of inorganic particles or organic particles, and optionally inorganic particles or a combination of inorganic particles and organic particles. The inorganic particles have high hardness and high thermal stability, and are less prone to decomposition. In addition, the inorganic particles typically have a hydroxyl group on the surface, and therefore easily construct a stable spatial network structure with the fibrous material (for example, nanocellulose). The organic particles have good thermal stability and are less prone to decomposition. In addition, when the internal temperature of the secondary battery reaches a melting point of the organic particles due to overcharging, thermal abuse, and the like, the organic particles can melt and play a role of blocking pores and breaking continuity, and therefore it is conducive to improving the safety performance of the secondary battery.

In some embodiments, optionally, the inorganic particles comprise one or more of inorganic particles with a dielectric constant of 5 or more, inorganic particles with ion conductivity but without ion storage capability, and inorganic particles capable of undergoing electrochemical reactions.

Optionally, the inorganic particles with a dielectric constant of 5 or more comprise one or more of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, $Pb(Zr,Ti)O_3$ (abbreviated as PZT), $Pb_{1-m}La_mZr_{1-n}Ti_nO_3$ (abbreviated as PLZT, 0<m<1, 0<n<1), $Pb(Mg_3Nb_{2/3})O_3$-$PbTiO_3$ (abbreviated as PMN-PT) and their respective modified inorganic particles. Optionally, the modification mode of each inorganic particle may be chemical modification and/or physical modification. The chemical modification mode includes coupling agent modification (by using for example silane coupling agent, titanate coupling agent, etc.), surfactant modification, and polymer grafting modification, etc. The physical modification mode may be mechanical force dispersion, ultrasonic dispersion, high-energy treatment and the like. Through modification treatment, the agglomeration of inorganic particles may be reduced, thus making the coating have a more stable and uniform spatial network structure; in addition, by selecting coupling agents, surfactants, or polymers with specific functional groups to modify inorganic particles, it also helps to improve the infiltration and retention of the coating to the electrolytic solution to and the adhesiveness of the coating to the porous substrate.

Optionally, the inorganic particles with ion conductivity but without ion storage capability comprise at least one of

$Li_3PO_4$, lithium titanium phosphate $Li_{x1}Ti_{y1}(PO_4)_3$, lithium aluminum titanium phosphate $Li_{x2}Al_{y2}Ti_{z1}(PO_4)_3$, (LiAl-TiP)$_{x3}O_{y3}$ type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$ type glass $Li_{x7}Si_{y7}S_{z3}$ or $P_2S_5$ type glass $Li_{x8}P_{y8}S_{z4}$, wherein $0 < x1 < 2$, $0 < y1 < 3$, $0 < x2 < 2$, $0 < y2 < 1$, $0 < z1 < 3$, $0 < x3 < 4$, $0 < y3 < 13$, $0 < x4 < 2$, $0 < y4 < 3$, $0 < x5 < 4$, $0 < y5 < 1$, $0 < z2 < 1$, $0 < w < 5$, $0 < x6 < 4$, $0 < y6 < 2$, $0 < x7 < 3$, $0 < y7 < 2$, $0 < z3 < 4$, $0 < x8 < 3$, $0 < y8 < 3$, $0 < z4 < 7$. As a result, this can further improve the ionic conductivity of the separator.

Optionally, the inorganic particles capable of undergoing electrochemical reactions comprise at least one of lithium-containing transition metal oxides, lithium-containing phosphates, carbon-based materials, silicon-based materials, tin-based materials, or lithium-titanium compounds.

In some embodiments, the organic particles comprise, but are not limited to, one or more of polystyrene particles, polyacrylic wax particles, polyethylene particles, polypropylene particles, cellulose, cellulose modifiers (e.g. carboxymethylcellulose), melamine resin particles, phenolic resin particles, polyester particles (e.g. polyethylene terephthalate, polyethylene naphthalate, polybutylene terephthalate), organic silicon resin particles, polyimide particles, polyamide imide particles, polyarylamide particles, polyphenylene sulfide particles, polysulfone particles, polyethersulfone particles, polyetheretherketone particles, polyaryletherketone particles, and copolymers of butyl acrylate and ethyl methacrylate (e.g. crosslinked polymers of butyl acrylate and ethyl methacrylate).

In some embodiments, the filler comprises inorganic particles with secondary particle morphology, and the inorganic particles with secondary particle morphology have a crystal form including at least one of $\theta$ crystal form, $\gamma$ crystal form, or $\eta$ crystal form. Optionally, the inorganic particles with secondary particle morphology have a crystal form including at least one of $\theta$ crystal form, or $\gamma$ crystal form.

In some embodiments, the inorganic particles with secondary particle morphology of $\theta$ crystal form are present in an amount of $\geq 50$ wt%, optionally from 55 wt% to 84 wt%, based on the total weight of the inorganic particles with secondary particle morphology.

In some embodiments, the inorganic particles with secondary particle morphology of $\gamma$ crystal form are present in an amount of $\geq 10$ wt%, optionally from 15 wt% to 44 wt%, based on the total weight of the inorganic particles with secondary particle morphology.

In some embodiments, the inorganic particles with secondary particle morphology of $\eta$ crystal form are present in an amount of $\leq 5$ wt%, optionally $\leq 2.5$ wt%, further optionally $\leq 1.5$ wt%, based on the total weight of the inorganic particles with secondary particle morphology.

The inorganic particles with secondary particle morphology of $\theta$ crystal form have moderate specific surface area and hardness, which can better improve the heat resistance and ion conductivity of the separator at the same time; inorganic particles with the secondary morphology of $\gamma$ crystal form and $\eta$ crystal form have the advantage of large specific surface area.

Thus, by selecting the fillers of different crystal forms, it facilitates improving one or more of heat resistance, ionic conductivity, bonding strength, and the infiltration and retention properties of the separator to an electrolytic solution.

In some embodiments, the filler comprises inorganic particles with secondary particle morphology, and the inorganic particles with secondary particle morphology have a crystal form including $\theta$ crystal form, $\gamma$ crystal form and $\eta$ crystal form, and the inorganic particles with secondary particle morphology have a $\theta$ crystal form are present in an amount of from 55 wt% to 84 wt%, the inorganic particles with secondary particle morphology have a $\gamma$ crystal form are present in an amount of from 15 wt% to 44 wt%, and the inorganic particles with secondary particle morphology have a $\eta$ crystal form are present in an amount of $\leq 2.5$ wt%, based on the total weight of the inorganic particles with secondary particle morphology.

In some embodiments, the inorganic particles with secondary particle morphology can be prepared by the following process including: subjecting a precursor solution of the inorganic particles to an oxidation reaction by high pressure sputtering, then heating at 600°C to 1200°C (for example, from 1 hour to 3 hours) to form the inorganic particles with primary particle morphology, and then drying at 150°C to 250°C (for example, from 30 minutes to 60 minutes) to obtain the inorganic particles with secondary particle morphology (by assembling the primary particles).

In some embodiments, the filler comprises inorganic particles with a primary particle morphology, and the inorganic particles with primary particle morphology have a crystal form including one or more of $\alpha$ crystal form and $\gamma$ crystal form, and optionally have a crystal form including $\alpha$ crystal form. Inorganic particles with primary particle morphology of $\alpha$ crystal form have the advantages of high hardness, good heat resistance, low dielectric constant, high safety and high true density, which can better improve the heat resistance of the separator.

In some embodiments, the inorganic particles with primary particle morphology have a crystal form including $\alpha$ crystal form, and the inorganic particles with primary particle morphology of $\alpha$ crystal form are present in an amount of $\geq 70$ wt%, optionally from 75 wt% to 100 wt%, based on the total weight of the inorganic particles with primary particle morphology.

In the X-ray diffraction spectra measured by using an X-ray diffraction meter, the inorganic particles of $\theta$ crystal form have diffraction peaks at 2θ of 36.68° ± 0.2° and 31.21° ± 0.2°. In the X-ray diffraction spectra measured by using an X-ray diffraction meter, the inorganic particles of $\gamma$ crystal form have diffraction peaks at 2θ of 66.95° ± 0.2° and 45.91° ± 0.2°. In the X-ray diffraction spectra measured by using an X-ray diffraction meter, the inorganic particles of $\eta$ crystal form have diffraction peaks at $2\theta$ of $31.89° \pm 0.2°$ and $19.37° \pm 0.2°$.

The X-ray diffraction spectrum of the inorganic particles can be obtained by testing the following process including: oven drying the inorganic particles, milling in a mortar (such as an agate mortar) for 30 minutes, and then testing using an X-ray diffractometer (such as a Miniflex 600-C) to obtain the X-ray diffraction spectrum. Cu target, Ni filter, tube pressure of 40 KV, tube flow of 15 mA, and continuous scanning range of from 5° to 80° may be used during the test.

In some embodiments, the content of the three-dimensional skeleton structure can be from 5 wt% to 40 wt%, optionally from 8 wt% to 30 wt%, from 10 wt% to 25 wt%, based on the total weight of the coating.

In some embodiments, the content of the filler can be greater than 60 wt%, optionally from 65 wt% to 90 wt%, from 70 wt% to 88 wt%, based on the total weight of the coating.

When the content of the three-dimensional skeleton structure is within the above range, it enables the coating slurry to have an appropriate viscosity, which is more conducive to applying. Additionally, it is beneficial for the three-dimensional skeleton structure to interlock with the fillers to form an integrated effect, thereby enabling the coating to have a more stable spatial network structure. This can further enhance the heat resistance, ionic conductivity, electrolytic solution infiltration and retention properties, as well as the voltage breakdown resistance of the separator.

In some embodiments, the coating may further comprise a non-granular binder. The non-granular binder is not limited to any particular type in the present application, and may be any well-known material with good adhesion. Optionally, the non-granular binder comprises an aqueous-solution-type binder which has the advantages of good thermodynamic stability and environmental friendliness, thereby facilitating the preparation and applying of the coating slurry. For example, the aqueous-solution-type binder may include at least one of aqueous-solution-type acrylic resin (for example, acrylic acid, methyl acrylic acid, sodium acrylate monomer homopolymer or copolymer with another comonomer), polyvinyl alcohol (PVA), isobutylene-maleic anhydride copolymer, or polyacrylamide.

In some embodiments, based on the total weight of the coating, a percentage of the non-granular binder in the coating is less than or equal to 2 wt%. The three-dimensional skeleton structure, the filler, and the like in the coating can form a stable spatial network structure, thereby allowing the separator to maintain high adhesion while reducing the amount of the binder.

In some embodiments, the thickness of the coating may be less than or equal to 2 $\mu$m, optionally from 0.5 $\mu$m to 1.5 $\mu$m. This is conducive to increasing the energy density of the secondary battery. The thickness of the coating refers to the thickness of the coating on one side of the porous substrate.

In some embodiments, the separator may further comprise an adhesion layer, where the adhesion layer is disposed on at least part of a surface of the coating, and the adhesion layer comprises a granular binder. The adhesion layer can not only prevent the coating from falling off and improve the safety performance of the secondary battery, but also improve an interface between the separator and an electrode and improve the cycle performance of the secondary battery.

Optionally, the granular binder comprises at least one of homopolymer or copolymer of acrylate monomer, homopolymer or copolymer of acrylic monomer, or homopolymer or copolymer of fluorine-containing olefin monomer. The comonomer includes but is not limited to at least one of the following: acrylate monomer, acrylic monomer, olefin monomer, halogen-containing olefin monomer, or fluoroether monomer.

Optionally, the granular binder comprises a vinylidene fluoride-based polymer, for example, a homopolymer of vinylidene fluoride (VDF) monomer and/or a copolymer of vinylidene fluoride monomer with a comonomer. The comonomer may be at least one of olefin monomer, fluorine-containing olefin monomer, chlorine-containing olefin monomer, acrylate monomer, acrylic monomer, or fluoroether monomer. Optionally, the comonomer may comprise at least one of the following: trifluoroethylene (VF3), chlorotrifluoroethylene (CTFE), 1,2-difluoroethylene, tetrafluoroethylene (TFE), hexafluoropropylene (HFP), perfluoro(alkyl vinyl ether) (for example, perfluoro(methyl vinyl ether) PMVE, perfluoro(ethyl vinyl ether) PEVE, and perfluoro(propyl vinyl ether) PPVE), perfluoro(1,3-dioxole), or perfluoro(2,2-dimethyl-1,3-dioxole) (PDD).

In some embodiments, the separator has a longitudinal thermal shrinkage rate at 150°C for 1 h of $\leq 4\%$, optionally from 0.5% to 3%.

In some embodiments, the separator has a lateral thermal shrinkage rate at 150°C for 1 h of $\leq 4\%$, optionally from 0.5% to 3%.

The separator has low thermal shrinkage rate at a high temperature of 150°C in both the lateral direction and the longitudinal direction, which can further improve the reliability of the secondary battery.

In some embodiments, the separator has a longitudinal tensile strength of $\geq 2200$ kg/cm$^2$, optionally from 2500 kg/m$^2$ to 4500 kg/m$^2$.

In some embodiments, the separator has a lateral tensile strength of $\geq 2200$ kg/m$^2$, optionally from 2500 kg/m$^2$ to 4500 kg/m$^2$.

The separator has high tensile strength in both the lateral direction and the longitudinal direction, which results in small probability of breakage of the separator when the secondary battery is expanded, thereby further improving the reliability of the secondary battery.

In some embodiments, the separator has a wetting length of ≥ 35 mm, optionally from 40 mm to 80 mm.

In some embodiments, the separator has a wetting speed of ≥ 4 mm/s, optionally from 4.5 mm/s to 10 mm/s.

The separator has good electrolytic solution infiltration and retention characteristics, which improves the ionic conductivity of the separator and the capacity utilization characteristics of the secondary battery.

In some embodiments, the separator has an air permeability of ≤ 300 s/100 mL, optionally from 100 s/100 mL to 270 s/100 mL. The separator has high air permeability, which can improve the ionic conductivity and the capacity utilization characteristics of the secondary battery.

In the present application, the thermal shrinkage, tensile strength, and air permeability of the separator have well-known meanings in the art and can be measured by methods known in the art. For example, they may be tested with reference to GB/T 36363-2018.

The wetting length and wetting speed of the separator have well-known meanings in the art, and may be measured with known instruments and methods in the art. An exemplary test method is as follows: cutting a separator into a sample with a width of 5 mm and a length of 100 mm, and fixing both ends of the sample and placing horizontally; taking 0.5 mg of electrolytic solution and dropping it in the center of the sample, and after the specified time (1 min in this application), taking a photo and measuring the length of electrolytic solution diffusion, thereby obtaining the wetting length and wetting speed of the separator. In order to ensure the accuracy of the test results, a plurality of samples (for example, from 5 to 10) can be tested, and the test results are obtained by calculating average value. The electrolytic solution may be prepared by mixing ethylene carbonate (EC), ethyl methyl carbonate (EMC), and diethyl carbonate (DEC) in a volume ratio of 30:50:20 to obtain an organic solvent, and then dissolving a fully dried $LiPF_6$ in the above organic solvent, to prepare an electrolytic solution with a concentration of 1 mol/L.

It should be noted that the coating parameters of the above separator are all coating parameters (e.g., thickness) on a single side of the porous substrate. When the coating is provided on both sides of the porous substrate, the coating parameters on either side satisfy the present application and are considered to fall within the protection scope of the present application.

## Preparation method

A second aspect of embodiments of the present application provides a method for preparing the separator according to the first aspect of the present application, comprising the following steps: providing a porous substrate; mixing a fibrous material and optionally a filler in a predetermined proportion in a solvent to formulate a coating slurry; applying the coating slurry on at least one surface of the porous substrate, and drying to obtain a separator, wherein the separator comprises a porous substrate and a coating provided on at least one surface of the porous substrate, wherein the coating comprises a fibrous material and at least a portion of the fibrous material is embedded in pores of the porous substrate.

In some embodiments, the dispersing line speed of the coating slurry may be 8 m/s-22 m/s, optionally 10 m/s-19 m/s, or 12 m/s-18 m/s. The depth of the fibrous material embedded in the pores of the porous substrate may be adjusted by adjusting the dispersing line speed of the coating slurry, and an angle between the fibrous material and the thickness direction of the porous substrate may be adjusted to be in a suitable range, e.g., the angle may be greater than or equal to 0° and less than 90°, optionally 30°-80°.

In some embodiments, the coating slurry can be applied at a speed of 30 m/min-140 m/min, optionally 90 m/min-130 m/min. The depth to which the fibrous material is embedded in the pores of the porous substrate can be adjusted by adjusting the coating slurry's coating speed, and the angle between the fibrous material and the thickness direction of the porous substrate can be adjusted to be in a suitable range, e.g. the angle can be greater than or equal to 0° and less than 90°, optionally 30°-80°.

In some embodiments, the drying temperature of the coating slurry may be 50°C-80°C, optionally 52°C-75°C, or 55°C-70°C. By adjusting the drying temperature of the coating slurry, the depth of the fibrous material embedded into the pores of the porous substrate can be adjusted, and the angle between the fibrous material and the thickness direction of the porous substrate can be adjusted to be in a suitable range, e.g., the angle may be greater than or equal to 0° and less than 90°, optionally 30°-80°.

In some embodiments, the total drying time of the coating slurry may be 3s-11s, optionally 5s-10s, and the depth to which the fibrous material is embedded in the pores of the porous substrate may be adjusted by adjusting the total drying time of the coating slurry, and the angle between the fibrous material and the direction of the thickness of the porous substrate may be adjusted to be in a suitable range, e.g., the angle may be greater than or equal to 0° and less than 90°, optionally 30°-80°.

In some embodiments, the drying is carried out in a multi-stage oven, optionally with a number of oven stages of 3-6, optionally 4-5, whereby the depth of the fibrous material embedded in the holes of the porous substrate can be adjusted by adjusting the number of oven stages, and the angle between the fibrous material and the direction of the thickness of the porous substrate can be adjusted to be in a suitable range, e.g. the angle can be greater than or equal to 0° and less than 90°, optionally 30°-80°.

In some embodiments, the drying is performed using a multi-stage oven, and the temperature of the first stage of the oven may be greater than 50°C, optionally greater than or equal to 55°C. The depth to which the fibrous material is embedded in the pores of the porous substrate can be adjusted by adjusting the temperature of the first stage of the oven, and the angle between the fibrous material and the thickness direction of the porous substrate can be adjusted to be within a suitable range, e.g., the angle can be greater than or equal to 0° and less than 90°, optionally 30°-80°.

In some embodiments, the drying is performed in a multi-stage oven, and the drying time of the first stage of the oven may be less than 4 s (seconds), optionally less than or equal to 3.5 s. By adjusting the drying time of the first stage of the oven, it is possible to adjust the depth to which the fibrous material is embedded in the pores of the porous substrate, and it is also possible to adjust the angle between the fibrous material and the direction of the thickness of the porous substrate in a suitable range, for example, the angle may be greater than or equal to 0° and less than 90°, optionally 30°-80°.

In some embodiments, the solvent used for preparing the coating slurry may be water, such as deionized water.

In some embodiments, the coating slurry may further comprise other components, for example, a dispersant, a wetting agent, a binder, a surfactant and the like.

In some embodiments, the fibrous material comprises at least one of an organic material or an inorganic material. Optionally, the organic material comprises at least one of nanocellulose, polytetrafluoroethylene nanofiber, or polyamide nanofiber. Optionally, the inorganic material comprises at least one of halloysite nanotubes, nano-rod-shaped alumina, nano-rod-shaped boehmite, nano-rod-shaped silicon oxide, or glass fibers.

In some embodiments, the fibrous material comprises nanocellulose.

In some embodiments, the nanocellulose can be obtained in the following method: providing cellulose powder with a whiteness of greater than or equal to 80%; mixing the obtained cellulose powder with a modification solution for reaction, followed by washing to remove impurities; adjusting the pH value of the resulting product to neutral, and then grinding and cutting to obtain nanocellulose.

Optionally, the cellulose powder with a whiteness of greater than or equal to 80% is commercially available, or can be obtained by a chemical method (for example, acid hydrolysis, alkali treatment, or Tempo catalytic oxidation), a biological method (for example, enzyme treatment), a mechanical method (for example, ultrafine grinding, ultrasonic crushing, or high-pressure homogenization), or the like. A fiber raw material for preparing the cellulose powder with a whiteness of greater than or equal to 80% may comprise at least one of plant fiber, such as cotton fiber (for example, Gossypium fiber and kapok fiber), fibrilia (for example, sisal fiber, ramie fiber, jute fiber, flax fiber, hemp fiber, and abaca fiber), palm fiber, wood fiber, bamboo fiber, or grass fiber.

In some embodiments, the cellulose powder with a whiteness of greater than or equal to 80% can also be prepared in the following method: after loosening and removing impurities from the fiber raw material, digesting the material with an alkali solution (for example, aqueous NaOH solution, with a concentration of 4 wt% to 20 wt%, optionally 5 wt% to 15 wt%), followed by the following processes in sequence: water washing (for example, for 3-6 times) for impurity removal, bleaching (for example, sodium hypochlorite and/or hydrogen peroxide may be used), acid washing for impurity removal, water washing for impurity removal, dehydrating, air drying, to obtain the cellulose powder.

In some embodiments, the modification solution may be an acid solution (for example, aqueous sulfuric acid solution, aqueous boric acid solution, aqueous phosphoric acid solution, or aqueous acetic acid solution) or an alkali solution (for example, urea solution in an organic solvent). Optionally, the modification solution is an acid solution.

Optionally, a concentration of the acid solution may be from 5 wt% to 80 wt%. When the modification solution is an aqueous sulfuric acid solution, the concentration of the acid solution may be from 40 wt% to 80 wt%, thereby obtaining cellulose powder with sulfonic acid group. When the modification solution is an aqueous boric acid solution, the concentration of the acid solution may be from 5 wt% to 10 wt%, thereby obtaining cellulose powder with boric acid group. When the modification solution is an aqueous phosphoric acid solution, the concentration of the acid solution may be from 45 wt% to 75 wt%, thereby obtaining cellulose powder with phosphoric acid group. When the modification solution is an aqueous acetic acid solution, the concentration of the acid solution may be from 40 wt% to 80 wt%, thereby obtaining cellulose powder with carboxylic acid group.

Optionally, the urea solution in an organic solvent is a urea solution in xylene, thereby obtaining cellulose powder with amino group.

In some embodiments, optionally, a mass ratio of the cellulose powder to the modification solution may be from 1:2.5 to 1:50, optionally from 1:5 to 1:30.

When the modification solution is an aqueous sulfuric acid solution, a mass ratio of the cellulose powder to the acid solution may be from 1:5 to 1:30. When the modification solution is an aqueous boric acid solution, a mass ratio of the cellulose powder to the acid solution may be from 1:20 to 1:50. When the modification solution is an aqueous phosphoric acid solution, a mass ratio of the cellulose powder to the acid solution may be from 1:5 to 1:30. When the modification solution is an aqueous acetic acid solution, a mass ratio of the cellulose powder to the acid solution may be from 1:5 to 1:30. When the modification solution is a urea solution in an organic solvent, a mass ratio of the cellulose powder to the urea solution in an organic solvent may be from 1:4 to 1:40.

In some embodiments, when the modification solution is an acid solution, the reaction may be carried out at a temperature not higher than 80°C, optionally at 30°C to 60°C, and the reaction time of the cellulose powder with the modification solution may be from 0.5 h to 4 h, optionally from 1 h to 3 h.

In some embodiments, when the modification solution is an alkali solution, the reaction may be carried out at a temperature of 100°C to 145°C, and the reaction time of the cellulose powder with the modification solution may be from 1 h to 5 h.

In some embodiments, grinding can be performed using a grinder, and cutting can be performed using a high-pressure homogenizer. The grinding parameters (for example, the number of grinding cycles and grinding time) of the grinder and the cutting parameters of the high-pressure homogenizer can be adjusted to obtain nanocellulose with different average diameters and/or different average lengths.

In some embodiments, a coating machine can be used for applying the coating slurry. The present application does not have specific limitation on the model of the coating machine, for example, a commercially available coating machine can be used. The coating machine comprises an intaglio roller; the intaglio roller is used for transferring the slurry onto the porous substrate.

In some embodiments, the coating slurry can be applied in a method such as transfer coating, rotary spraying, dip coating, and the like.

In some embodiments, the preparation method further comprises the following step: applying a slurry containing a granular binder on at least part of a surface of the coating to create an adhesion layer after drying.

Some raw materials and parameters such as their amounts used in the method for preparing the separator of the present application can be determined with respect to the separator of the first aspect of the embodiments of the present application, and will not be repeatedly described herein.

Unless otherwise specified, all raw materials used in the method for preparing the separator of the present application may be commercially available.

## Secondary battery

A third aspect of embodiments of the present application provides a secondary battery.

The secondary battery, also known as a rechargeable battery or accumulator, is a battery that can continue to be used by activating active materials by means of charging after the battery has been discharged. Typically, a secondary battery includes an electrode assembly and an electrolytic solution, and the electrode assembly includes a positive electrode plate, a negative electrode plate, and a separator. The separator is disposed between the positive electrode plate and the negative electrode plate, mainly functioning to prevent short circuit between the positive and negative electrodes while allowing active ions to pass through.

The present application has no particular limitation on the type of the secondary battery. For example, the secondary battery may be a lithium ion battery, a sodium ion battery, a lithium metal battery, a sodium metal battery and the like. In particular, the secondary battery may be a lithium ion secondary battery.

The secondary battery of the third aspect of embodiments of the present application comprises the separator of the first aspect of embodiments of the present application or the separator prepared by the method of the second aspect of embodiments of the present application, wherein the separator is spaced between the positive electrode plate and the negative electrode plate. Optionally, the coating of the present application is present on at least the side of the separator close to the negative electrode plate. As a result, the secondary battery of the present application can have high energy density, high thermal stability, long service life and good dynamic performance.

[Positive electrode plate]

In some embodiments, the positive electrode plate comprises a positive electrode current collector and a positive electrode film layer which is disposed on at least one surface of the positive electrode current collector and comprises a positive electrode active material. For example, the positive electrode current collector has two opposite surfaces along the thickness direction of the positive electrode current collector, and the positive electrode film layer is disposed on any one or both of the two opposite surfaces of the positive electrode current collector.

When the secondary battery of the present application is a lithium ion battery, the positive electrode active material may comprise, but is not limited to, one or more of lithium transition metal oxides, lithium-containing phosphates, and their respective modified compounds thereof. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphates may include, but are not limited to, one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof.

In some embodiments, in order to further increase the energy density of the secondary battery, the positive electrode active material for the lithium ion battery may comprise one or more of lithium transition metal oxides having general formula $Li_aNi_bCo_cM_dO_eA_f$ and modified compounds thereof. $0.8 \leq a \leq 12$, $0.5 \leq b < 1$, $0 < c < 1$, $0 < d < 1$, $1 \leq e \leq 2$, $0 \leq f \leq 1$, M is one or more selected from Mn, Al, Zr, Zn, Cu, Cr, Mg, Fe, V, Ti and B, and A is one or more selected from N, F, S and Cl.

As an example, the positive electrode active material for lithium ion batteries may comprise one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$ and $LiMnPO_4$.

When the secondary battery of the present application is a sodium ion battery, the positive electrode active material may comprise, but not limited to, one or more of sodium-containing transition metal oxides, polyanion materials (such as phosphate, fluorophosphate, pyrophosphate, sulfate, and the like), and Prussian blue materials.

As an example, the positive electrode active materials for sodium ion batteries may comprise one or more of $NaFeO_2$, $NaCoO_2$, $NaCrO_2$, $NaMnO_2$, $NaNiO_2$, $NaNi_{1/2}Ti_{1/2}O_{02}$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, Prussian blue materials and the materials having the general formula $X_pM'_q(PO_4)_rO_xY_{3-x}$. In general formula $X_pM'_q(PO_4)_rO_xY_{3-x}$, $0 < p \leq 4$, $0 < q \leq 2$, $1 \leq r \leq 3$, $0 \leq x \leq 2$, X is selected from one or more of $H^+$, $Li^+$, $Na^+$, $K^+$ and $NH_4^+$, M' is a transition metal cation and optionally is one or more of V, Ti, Mn, Fe, Co, Ni, Cu and Zn, and Y is a halogen anion and optionally is one or more of F, Cl and Br.

In the present application, the modified compounds of the above positive electrode active materials may be doping-modified and/or surface coating-modified compounds of the positive electrode active materials.

In some embodiments, the positive electrode film layer may further optionally comprise a conductive agent for positive electrode. The present application does not particularly limit the type of conductive agent for positive electrode, and as an example, the conductive agent for positive electrode comprises one or more of superconducting carbon, conductive graphite, acetylene black, carbon black, Ketjen black, carbon dots, carbon nanotubes, graphene, and carbon nanofibers.

In some embodiments, the positive electrode film layer may further optionally comprise a binder for positive electrode. The present application does not particularly limit the type of the binder for positive electrode, and as an example, the binder for positive electrode may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins.

In some embodiments, the positive electrode current collector may be a metal foil or a composite current collector. As an example of the metal foil, aluminum foil may be used. The composite current collector may include a base layer of polymeric material and a layer of metallic material formed on one or more surfaces of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry to a positive electrode current collector followed by drying and cold-pressing. The positive electrode slurry is usually formed by dispersing a positive electrode active material, an optional conductive agent, an optional binder and any other components in a solvent and stirring them uniformly. The solvent may be N-methylpyrrolidone (NMP), but is not limited thereto.

[Negative electrode plate]

In some embodiments, the negative electrode plate comprises a negative electrode current collector and a negative electrode film layer which is disposed on one or more surfaces of the negative electrode current collector and comprises a negative electrode active material. For example, the negative electrode current collector has two opposite surfaces along the thickness direction of the negative electrode current collector, and the negative electrode film layer is disposed on any one or both of the two opposite surfaces of the negative electrode current collector.

The negative electrode active material can be a negative electrode active material well known in the art for secondary batteries. As an example, the negative electrode active material may include but not limited to one or more of natural graphite, artificial graphite, soft carbon, hard carbon, silicon-based material, tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy materials.

In some embodiments, the negative electrode film layer may further optionally comprise a conductive agent for negative electrode. The present application does not particularly limit the type of conductive agent for negative electrode, and as an example, the conductive agent for negative electrode may include one or more of superconducting carbon, conductive graphite, acetylene black, carbon black, Ketjen black, carbon dots, carbon nanotubes, graphene, and carbon nanofibers.

In some embodiments, the negative electrode film layer may further optionally comprise a binder for negative electrode. The present application does not particularly limit the type of the binder for negative electrode, and as an example, the binder for negative electrode may include one or more of styrene-butadiene rubber (SBR), water-soluble unsaturated resin SR-1B, aqueous acrylics resin (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally comprise other auxiliary agents. As examples, other auxiliary agents may include thickeners, e.g., sodium carboxymethylcellulose (CMC), PTC thermistor material, etc.

In some embodiments, the negative electrode collector may be a metal foil or a composite collector. As an example of a metal foil, a copper foil may be used. The composite current collector may include a base layer of polymeric material and a layer of metallic material formed on one or more surfaces of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry to a negative electrode collector, followed by drying and cold-pressing. The negative electrode slurry is typically formed by dispersing a negative active material, an optional conductive agent, an optional binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further comprises a conductive primer layer (such as composed of a conductive agent and a binder) sandwiched between the negative electrode current collector and the negative electrode film layer, and disposed on the surface of the negative electrode current collector. In some embodiments, the negative electrode plate described in the present application further comprises a protective layer covering the surface of the negative electrode film layer.

[Electrolytic solution]

During the charging and discharging process of the battery, active ions are intercalated and deintercalated back and forth between the positive electrode plate and the negative electrode plate, and the electrolytic solution functions as conducting active ions between the positive electrode plate and the negative electrode plate. There is no specific limitation on the type of electrolytic solution in the present application, and it can be selected according to actual needs.

The electrolytic solution comprises an electrolyte salt and a solvent. There is no specific limitation on the type of solvent and the electrolyte salt, and they can be selected according to actual needs.

When the secondary battery of the present application is a lithium ion battery, as an example, the electrolyte salt may comprise one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), lithium bis(oxalate)borate (LiBOB), lithium difluorophosphate ($LiPO_2F_2$), lithium difluorobisoxalate phosphate (LiDFOP), and lithium tetrafluorooxalate phosphate (LiTFOP).

When the secondary battery of the present application is a sodium ion battery, as an example, the electrolyte salt may comprise, but is not limited to, one or more of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonimide (NaFSI), sodium bistrifluoromethanesulfonimide (NaTFSI), sodium trifluoromethanesulfonate (NaTFS), sodium difluoro(oxalate) borate (NaDFOB), sodium bis(oxalate)borate (NaBOB), sodium difluorophosphate ($NaPO_2F_2$), sodium difluorobisoxalate phosphate (NaDFOP) and sodium tetrafluorooxalate phosphate (NaTFOP).

As an example, the solvent may comprise, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution may optionally further comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

In some embodiments, the positive electrode plate, the separator, and the negative electrode plate may be fabricated into an electrode assembly by a winding process and/or a stacking process.

In some embodiments, the secondary battery may comprise an outer packaging. The outer packaging may be used to encapsulate the electrode assembly and the electrolytic solution.

In some embodiments, the outer packaging of the secondary battery may be a hard housing, such as a hard plastic housing, aluminum housing, steel housing, or the like. The outer packaging of the secondary battery may also be a soft pack, such as a pouch type soft pack. The material of the soft pack may be plastic, such as one or more of polypropylene (PP), polybutylene terephthalate (PBT), and polybutylene succinate (PBS).

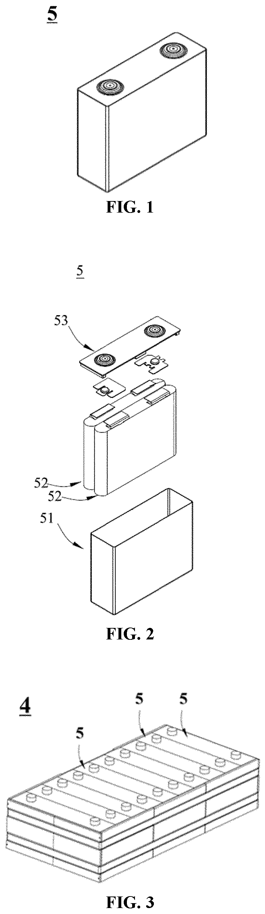

The shape of the secondary battery is not particularly limited in the present application, and it may be cylindrical, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery of the present application is well-known. In some embodiments of the present application, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments of the present application, the above-mentioned battery modules can also be assembled into a battery pack, and the number of battery modules included in the battery pack can be adjusted according to the application and capacity of the battery pack.

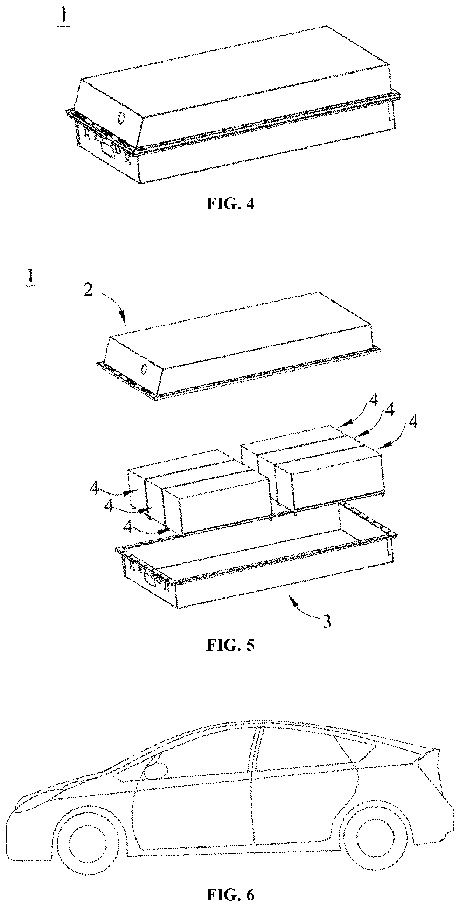

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

## Electrical device

A fourth aspect of the embodiments of the present application provides an electrical device comprising at least one of the secondary battery, battery module, or battery pack of the third aspect of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

**Examples**

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

**Preparation of nanocellulose**

After loosening the Gossypium linter and slag removal by a cotton opener, the obtained mixture was cooked at 150°C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), dehydrated and dried with air flow to obtain Gossypium cellulose powder with whiteness of $\geq$ 85%.

1 kg of the obtained Gossypium cellulose powder was mixed with 30 kg of 60 wt.% sulfuric acid aqueous solution, and the reaction was carried out at 55°C-60°C for 1.5 h. After the reaction was completed, the reaction mixture was subjected to washing with water (3 times of water washing) to remove impurities, filtering, and removing acid and impurities. The pH of the mixture was adjusted to neutral with 10 wt.% aqueous NaOH solution, and then subjected to grinding with a grinder and nanoscale cutting with a high pressure homogenizer, to obtain nanocellulose with sulfonic acid modifying group having a molar ratio of sulfonic acid group to surface hydroxyl group of 5:3.

During the preparation process, nanocellulose with different average diameters and/or lengths can be obtained by adjusting the processing parameters of the grinder, and the cutting parameters of the high-pressure homogenizer.

The molar ratio of the modifying groups to the surface hydroxyl groups in the nanocellulose can be determined by the following method. According to the phthalic anhydride method in GB/T 12008.3-2009, the hydroxyl values of the raw cellulose and nanocellulose (the milligrams of potassium hydroxide equivalent to the hydroxyl content in each sample) were tested respectively. The obtained values, expressed in mg KOH/g, were converted to mmol/g as a hydroxyl content. By subtracting the hydroxyl content of the nanocellulose from that of the raw cellulose, the content of the modifying groups (i.e., the content of the modified hydroxyl groups) can be obtained, thereby calculating the molar ratio of the modifying groups to the hydroxyl groups.

**Example 1**

Preparation of separator

A PE porous substrate was provided, with a thickness $H_2$ of 6.5 $\mu$m, a melting point $T_m$ of 135.8°C, and an average pore size V of 32 nm.

Formulation of coating slurry: the secondary particles of alumina, nanocellulose as shown in Table 1, and binder polyacrylic acid were mixed homogeneously in the appropriate amount of solvent deionized water at a mass ratio of 75:23.5:1.5 to obtain the coating slurry.

Coating: The prepared coating slurry was applied to both surfaces of the PE porous substrate using a coating machine, followed by drying and cutting, to obtain the separator.

The dispersing line speed of coating slurry, coating speed and setting parameters of multi-stage oven can be detailed in Table 1.

Preparation of positive electrode plate

The positive electrode active material $LiNi_{0.5}Co_{0.2}Mn_{0.3}O_2$ (NCM523), carbon black (Super P) as conductive agent, and polyvinylidene fluoride (PVDF) as binder were uniformly mixed at a mass ratio of 96.2:2.7:1.1 in an appropriate amount of solvent N-methylpyrrolidone (NMP) to obtain a positive electrode slurry; the positive electrode slurry was applied on an aluminum foil as positive electrode collector, and after processes including drying, cold-pressing, slitting, cutting and other processes, the positive electrode plate was obtained.

Preparation of negative electrode plate

Artificial graphite as negative electrode active material, carbon black (Super P) as conductive agent, styrene butadiene rubber (SBR) as binder, and carboxymethyl cellulose sodium (CMC) were mixed at a mass ratio of 96.4:0.7:1.8:1.1 in a suitable solvent deionized water to obtain a negative electrode slurry; the negative electrode slurry was applied onto a copper foil as negative electrode current collector; and after processes including drying, cold-pressing, slitting and cutting, the negative electrode plate was obtained.

Preparation of electrolytic solution

Ethylene carbonate (EC) and ethyl methyl carbonate (EMC) were mixed at a mass ratio of 30:70 to obtain an organic solvent, and then sufficiently dried $LiPF_6$ was dissolved in the above organic solvent, to prepare an electrolytic solution with a concentration of 1 mol/L.

Preparation of secondary battery

The positive electrode plate, the separator, and the negative electrode plate were stacked and wound in sequence to obtain an electrode assembly; the electrode assembly was placed in an aluminum plastic film as an outer package and dried, followed by injection with the electrolytic solution; after the processes including vacuum encapsulation, standing, chemical formation, and shaping, a small soft-pack secondary battery with a capacity of 4240 mAh was obtained.

**Examples 2-10 and Comparative Example 1**

The secondary batteries were prepared by a method similar to that of Example 1, except that, the nanocellulose used in the preparation of the separator had different average diameters and average lengths, as well as the dispersing line speed of the coating slurry, the coating speed and/or the setting parameters of the multi-stage oven were different, as shown in detail in Table 1.

In Table 1, $H_1$ was the depth of the nanocellulose embedded in the pores of the porous substrate, in units of $\mu m$; $H_2$ is the thickness of the porous substrate, and in Table 1, $H_2$ was 6.5 $\mu m$; L was the average length of the nanocellulose, and D was the average diameter of the nanocellulose, both in units of nm; V is the average pore size of the porous substrate, and in Table 1, the porous substrate corresponding to Examples 1-7 had an average pore size of V of 32 nm, and the average pore size V of the porous substrate corresponding to Examples 8-10 was 36 nm, which can be obtained according to the test method of the present application as described above.

**Test section**

(1) Thermal shrinkage rate test of separator

Sample preparation: The separator prepared above was punched into samples with a width of 50 mm and a length of 100 mm using a punching machine; and five parallel samples were placed on A4 paper and fixed; and then the A4 paper loaded with the samples was placed on corrugated paper with a thickness of from 1 mm to 5 mm.

Sample test: The A4 paper placed on corrugated paper was put into a blast oven, with the temperature of the blast oven set to 150°C; after the temperature reached the preset temperature and stabilized for 30 minutes, timing was started, and after the preset time (1 hour for the present application) was reached, the length and width of the separator were measured, and the values were denoted as a and b, respectively

Calculation of thermal shrinkage rate: machine direction (MD) heat shrinkage rate = [(100-a)/100] $\times$ 100%, and the average value of five replicate samples was taken as the test result.

(2) Hot box testing of secondary battery

The secondary battery was charged with a constant current of 1 C to 4.2 V at 25°C, and continued to charge with the constant voltage until the current was $\leq$ 0.05 C, and it was allowed to stand for 5 minutes; then the secondary batteries with a fixture was tested in a DHG-9070A DHG series high-temperature oven, and raised from room temperature to 80 $\pm$ 2°C at a rate of 5°C/min, and held for 30 minutes; then, the temperature was raised at a heating rate of 5°C/min. Every time the temperature was raised by 5 °C, the temperature was kept for 30 minutes. During the temperature rise process, the surface temperature change of the secondary battery was monitored. When the temperature started to rise sharply, the corresponding oven temperature was recorded as the hot box failure temperature of the secondary battery. The higher hot box failure temperature of a secondary battery means the better thermal stability of the secondary battery. For accuracy, the average value of five replicate samples was taken as the test result.

(3) Test of cycle performance of secondary battery

At 25°C, the secondary battery was charged to 4.2 V with a constant current of 1 C, continued to charge at constant voltage until the current was ≤ 0.05 C, at which time the secondary battery was in a fully charged state and the charge capacity was recorded, i.e. the charge capacity after the first cycle; After the secondary battery was allowed to stand for 5 min, it was discharged to 2.8 V with a constant current of 1 C, which was a cyclic charge and discharge process and at which time the discharge capacity was recorded, i.e. the discharge capacity after the first cycle. The secondary battery was subjected to the above cyclic charge-discharge process, and the discharge capacity after each cycle was recorded. Capacity retention ratio (%) of secondary battery at 25°C after 1000 cycles = discharge capacity after 1000 cycles/discharge capacity after the first cycle × 100%. For accuracy, the average value of five replicate samples was taken as the test result.

As can be seen from Table 1, by setting a coating comprising a fibrous material on the surface of the porous substrate of the separator, and making the depth to which the fibrous material is embedded in the pores of the porous substrate greater than or equal to 0.02 μm, it is possible to enhance the hot box failure temperature of the secondary battery, to play the role of lowering the degree of thermal runaway of the secondary battery, or even preventing thermal runaway from occurring in the secondary battery, and it is also possible to make the secondary battery have a long cyclic life.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

Table 1

| No. | Dispersing line speed(m/s) | Coating speed (m/min) | Parameters of oven | | | | | Nanocellulose | | | $H_1$ (μm) | $H_1/H_2$ | $1000H_1/L$ | V/D | MD Thermal shrinkage rate at 150°C/1h | Hot box failure temperature (°C) | Capacity retention ratio after 1000 cycles at 25 °C |
|---|---|---|---|---|---|---|---|---|---|---|---|---|---|---|---|---|---|
| | | | Number of oven stages | Temperature of the first stage of oven (°C) | Drying time of the first stage of the oven (s) | Temperature of the other stages of the oven (°C) | Total drying time (s) | Average diameter D (nm) | Average length L (nm) | L/D | | | | | | | |
| Comparative Example 1 | 20 | 80 | 3 | 45 | 3.8 | 55 | 12 | 12 | 150 | 12.5 | 0.018 | 0.0028 | 0.1213 | 2.67 | 5.5% | 162 | 80.0% |
| Example 1 | 16 | 90 | 4 | 55 | 3.5 | 65 | 10 | 24 | 300 | 12.5 | 0.026 | 0.0040 | 0.0867 | 1.33 | 3.0% | 165 | 84.0% |
| Example 2 | 16 | 90 | 4 | 55 | 3.5 | 70 | 10 | 24 | 300 | 12.5 | 0.033 | 0.0050 | 0.1083 | 1.33 | 2.8% | 168 | 84.5% |
| Example 3 | 16 | 100 | 4 | 55 | 3.0 | 65 | 9 | 24 | 300 | 12.5 | 0.039 | 0.0060 | 0.1300 | 1.33 | 2.5% | 170 | 85.0% |
| Example 4 | 16 | 100 | 4 | 55 | 3.0 | 70 | 9 | 28 | 350 | 12.5 | 0.046 | 0.0070 | 0.1300 | 1.14 | 2.2% | 172 | 86.0% |
| Example 5 | 16 | 120 | 4 | 55 | 2.5 | 65 | 7 | 28 | 350 | 12.5 | 0.052 | 0.0080 | 0.1486 | 1.14 | 1.8% | 178 | 88.0% |
| Example 6 | 16 | 120 | 4 | 55 | 2.5 | 70 | 7 | 30 | 400 | 13.3 | 0.065 | 0.0100 | 0.1625 | 1.07 | 1.5% | 180 | 87.0% |
| Example 7 | 16 | 120 | 4 | 55 | 2.5 | 75 | 7 | 30 | 400 | 13.3 | 0.081 | 0.0125 | 0.2031 | 1.07 | 1.2% | 183 | 86.0% |
| Example 8 | 16 | 120 | 5 | 60 | 2.5 | 75 | 6.8 | 34 | 450 | 12.9 | 0.100 | 0.0154 | 0.2222 | 1.06 | 1.5% | 180 | 84.5% |
| Example 9 | 16 | 130 | 6 | 60 | 2.3 | 75 | 7 | 34 | 450 | 12.9 | 0.150 | 0.0231 | 0.3333 | 1.06 | 1.6% | 178 | 83.5% |
| Example 10 | 16 | 140 | 6 | 65 | 2.1 | 75 | 7 | 34 | 450 | 12.9 | 0.200 | 0.0308 | 0.4444 | 1.06 | 1.8% | 174 | 83.0% |

**Claims**

1.  A separator comprising a porous substrate and a coating provided on at least one surface of the porous substrate, wherein the coating comprises a fibrous material and at least a portion of the fibrous material is embedded in pores of the porous substrate, and a depth to which the fibrous material is embedded in the pores of the porous substrate along the direction of the thickness of the separator is denoted as $H_1$, and $H_1$ is greater than or equal to 0.02 $\mu$m.

2.  The separator according to claim 1, wherein $H_1$ is 0.022 m-0.150 $\mu$m, optionally 0.025 m-0.100 $\mu$m.

3.  The separator according to claim 1 or 2, wherein the porous substrate has a thickness denoted as $H_2$ in $\mu$m, and $H_1/H_2$ is greater than or equal to 0.003;

    optionally, $H_1/H_2$ is 0.004-0.025, even more optionally, $H_1/H_2$ is 0.0045-0.020;
    optionally, the porous substrate has a thickness denoted as $H_2$, and $H_2$ is less than or equal to 12 $\mu$m, more optionally 3 $\mu$m-10 $\mu$m.

4.  The separator according to any one of claims 1 to 3, wherein the fibrous material has an average length denoted as L in nm, and $0.03 \leq 1000H_1/L \leq 0.5$, optionally, $0.05 \leq 1000H_1/L \leq 0.35$.

5.  The separator according to any one of claims 1 to 4, wherein

    the porous substrate has an average pore diameter denoted as V in nm,
    the fibrous material has an average diameter denoted as D in nm, and

    $$0.6 \leq V/D \leq 2.1;$$

    optionally, $0.7 \leq V/D \leq 1.8$, more optionally, $0.8 \leq V/D \leq 1.6$;
    optionally, $20 \text{ nm} \leq V \leq 40 \text{ nm}$, more optionally, $25 \text{ nm} \leq V \leq 37 \text{ nm}$.

6.  The separator according to any one of claims 1 to 5, wherein

    the porous substrate has a melting point denoted as $T_m$ in °C,
    the fibrous material has an average diameter denoted as D in nm,
    the fibrous material has an average length denoted as L in nm, and

    $$0.03 \leq L/(D \times T_m) \leq 0.14;$$

    optionally, $0.04 \leq L/(D \times T_m) \leq 0.12$, more optionally, $0.05 \leq L/(D \times T_m) \leq 0.10$;
    optionally, $T_m \geq 120$°C, more optionally, $120°C \leq T_m \leq 180°C$.

7.  The separator according to any one of claims 1 to 6, wherein the separator satisfies at least one of the following conditions:

    (1) the fibrous material has an average diameter denoted as D, D being greater than or equal to 15 nm, optionally 20 nm-35 nm;
    (2) the fibrous material has an average length denoted as L, L being 100 nm-600 nm, optionally 200 nm-500 nm;
    (3) the fibrous material has an aspect ratio denoted as L/D, L/D being 3-40, optionally 6-30;
    (4) the fibrous material has a shape including one or more of bar, tubular, rod and fibrous shape.

8.  The separator according to any one of claims 1 to 7, wherein the fibrous material comprises at least one of an organic material or an inorganic material;

    optionally, the organic material comprises at least one of nanocellulose, polytetrafluoroethylene nanofibers, or polyamide nanofibers; optionally, the nanocellulose comprises at least one of cellulose nanofibers, cellulose nanowhiskers, or bacterial nanocellulose;
    optionally, the inorganic material comprises at least one of halloysite nanotubes, nanorodular alumina, nanorodular boehmite, nanorodular silicon oxide or glass fibers.

9. The separator according to any one of claims 1 to 8, wherein the fibrous material comprises nanocellulose, and the nanocellulose comprises at least one of unmodified nanocellulose or modified nanocellulose;

> optionally, the modified nanocellulose comprises a modifying group, and the modifying group comprises at least one of an amino group, a carboxylic acid group, an aldehyde group, a sulfonic acid group, a boric acid group, or a phosphoric acid group, more optionally the modifying group comprises at least one of a sulfonic acid group, a boric acid group, or a phosphoric acid group;
> optionally, the modified nanocellulose comprises a hydroxyl group and a modifying group, and a molar ratio of the modifying group to the hydroxyl group is from 1:4 to 4:1, more optionally from 2:3 to 7:3.

10. The separator according to any one of claims 1 to 9, wherein the fibrous material comprises a sulfonic acid group and a content of sulfur element in the fibrous material is $\geq 0.1$ wt%, optionally from 0.2 wt% to 0.5 wt%, based on the total weight of the fibrous material.

11. The separator according to any one of claims 1 to 10, wherein the coating comprises a three-dimensional skeletal structure and a filler, the three-dimensional skeletal structure comprising the fibrous material, and at least a portion of the filler being filled in the three-dimensional skeletal structure;
optionally, the filler comprises at least one of primary particles or secondary particles.

12. The separator according to claim 11, wherein

> the fibrous material has an average length denoted as L in nm,
> the filler has a volume-distributed particle size Dv50 denoted as A in nm, and $L \geq (A \times \sqrt{2})/8$;
> optionally, 80 nm $\leq$ A $\leq$ 220 nm, more optionally, 100 nm $\leq$ A $\leq$ 200 nm.

13. The separator according to claim 11 or 12, wherein

> a content of the three-dimensional skeletal structure is from 5 wt% to 40 wt%, optionally from 10 wt% to 25 wt%, based on the total weight of the coating; and/or
> a content of the filler is greater than 60wt%, optionally from 70wt% to 88wt%, based on the total weight of the coating.

14. The separator according to any one of claims 1 to 13, wherein the coating further comprises a non-granular binder;

> optionally, the non-granular binder comprises an aqueous solution-type binder;
> optionally, the non-granular binder in the coating is present in an amount of $\leq 2$ wt%, based on the total weight of the coating.

15. The separator according to any one of claims 1 to 14, wherein the coating has a thickness of $\leq 2$ $\mu$m, optionally from 0.5 $\mu$m to 1.5 $\mu$m.

16. The separator according to any one of claims 1 to 15, wherein the separator further comprises an adhesive layer, the adhesive layer is disposed on at least part of a surface of the coating, and the adhesive layer comprises a granular binder;
optionally, the granular binder comprises at least one of a homopolymer or copolymer of acrylate monomer, a homopolymer or copolymer of acrylic monomer, a homopolymer or copolymer of fluorine-containing olefin monomer.

17. The separator according to any one of claims 1 to 16, wherein the separator satisfies at least one of the following conditions (1) to (7):

> (1) the separator has a longitudinal thermal shrinkage rate at 150°C for 1 h of $\leq 4$%, optionally from 0.5% to 3%;
> (2) the separator has a lateral thermal shrinkage rate at 150°C for 1 h of $\leq 4$%, optionally from 0.5% to 3%;
> (3) the separator has a longitudinal tensile strength of $\geq 2200$ kg/cm$^2$, optionally from 2500 kg/m$^2$ to 4500 kg/m$^2$;
> (4) the separator has a lateral tensile strength of $\geq 2200$ kg/m$^2$, optionally from 2500 kg/m$^2$ to 4500 kg/m$^2$;
> (5) the separator has a wetting length of $\geq 35$ mm, optionally from 40 mm to 80 mm;
> (6) the separator has a wetting speed of $\geq 4$ mm/s, optionally from 4.5 mm/s to 10 mm/s;
> (7) the separator has an air permeability of $\leq 300$ s/100 mL, optionally from 100 s/100 mL to 270 s/100 mL.

**18.** A method for preparing the separator according to any one of claims 1 to 17, comprising the steps of: providing a porous substrate; mixing a fibrous material and optionally a filler in a predetermined proportion in a solvent to formulate a coating slurry; applying the coating slurry on at least one surface of the porous substrate, and drying to obtain a separator that comprises the porous substrate and a coating provided on at least one surface of the porous substrate, wherein the coating comprises the fibrous material and at least a portion of the fibrous material is embedded in pores of the porous substrate, and a depth to which the fibrous material is embedded in the pores of the porous substrate along the direction of the thickness of the separator is denoted as $H_1$, and $H_1$ is greater than or equal to 0.02 $\mu$m.

**19.** The method according to claim 18, wherein the method satisfies at least one of the following conditions (1) to (7):

(1) the coating slurry has a dispersing line speed of 8m/s-22m/s, optionally 12m/s-18m/s;
(2) the coating slurry has a coating speed of 30m/min-140m/min, optionally 90m/min-130m/min;
(3) the coating slurry has a drying temperature of 50°C-80°C, optionally 55°C-70°C;
(4) the coating slurry has a total drying time of 3s-11s, optionally 5s-10s;
(5) the drying is carried out in a multi-stage oven, optionally the number of the oven stages is 3-6;
(6) the drying is carried out in a multi-stage oven, the temperature of the first stage of the oven being greater than 50°C, optionally greater than or equal to 55°C;
(7) the drying is carried out in a multi-stage oven, and the drying time in the first stage of the oven is less than 4s, optionally less than or equal to 3.5s.

**20.** A secondary battery comprising the separator according to any one of claims 1 to 17 or the separator obtained by the method according to any one of claims 18-19.

**21.** An electrical device comprising the secondary battery according to claim 20.

**5**

**FIG. 1**

**5**

53

52
52

51

**FIG. 2**

**4**   5   5

5

**FIG. 3**

1

FIG. 4

1

2

4
4
4

4
4

4

3

FIG. 5

FIG. 6

## INTERNATIONAL SEARCH REPORT

| | International application No. |
|---|---|
| | **PCT/CN2023/077315** |

| A. | CLASSIFICATION OF SUBJECT MATTER |
|---|---|

H01M50/44(2021.01)i;  H01M50/40(2021.01)i

According to International Patent Classification (IPC) or to both national classification and IPC

| B. | FIELDS SEARCHED |
|---|---|

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 纤维, 线, 管, 棒, 杆, 嵌, 插, 伸, 孔, 深度, 长度, 比例, 占比, 大小, 尺寸, 厚度, 涂, 速度, 速率, fiber, fibre, nanowire, nanotube, nanorod, depth, thickness, coat

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112018305 A (INDUSTRIAL TECHNOLOGY RESEARCH INSTITUTE) 01 December 2020 (2020-12-01)<br>description, paragraphs [0005]-[0085], and figure 4 | 1-21 |
| A | CN 115380430 A (NINGDE AMPEREX TECHNOLOGY LTD.) 22 November 2022 (2022-11-22)<br>entire document | 1-21 |
| A | CN 211743278 U (NINGBO ROUCHUANG NANOMETER TECHNOLOGY CO., LTD.) 23 October 2020 (2020-10-23)<br>entire document | 1-21 |
| A | CN 207731986 U (DONGGUAN SAIPUKE ELECTRONIC TECHNOLOGY CO., LTD.) 14 August 2018 (2018-08-14)<br>entire document | 1-21 |
| A | KR 20220088084 A (DAEGU GYEONGBUK INSTITUTE OF SCIENCE AND TECHNOLOGY) 27 June 2022 (2022-06-27)<br>entire document | 1-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 August 2023** | **22 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/077315**

| Patent document cited in search report | | | Publication date (day/month/year) | Patent family member(s) | | | Publication date (day/month/year) |
|---|---|---|---|---|---|---|---|
| CN | 112018305 | A | 01 December 2020 | TW | 202043038 | A | 01 December 2020 |
| | | | | US | 2020376821 | A1 | 03 December 2020 |
| CN | 115380430 | A | 22 November 2022 | WO | 2021189476 | A1 | 30 September 2021 |
| | | | | EP | 4131628 | A1 | 08 February 2023 |
| | | | | US | 2023044348 | A1 | 09 February 2023 |
| CN | 211743278 | U | 23 October 2020 | CN | 110993868A | A | 10 April 2020 |
| CN | 207731986 | U | 14 August 2018 | | None | | |
| KR | 20220088084 | A | 27 June 2022 | KR | 102494711 | B1 | 06 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB T287242012 A
- GB T2165012008 A
- GB T60402019 A
- GB T190772016 A
- GB T363632018 A
- GB T1200832009 A